# EUROPEAN PATENT APPLICATION

(11) **EP 2 219 350 A1**
(43) Date of publication of application: **18.08.2010**
(21) Application number: 10153258.8
(22) Date of filing: 11.02.2010
(51) Int. Cl.: H04M 1/2745, H04M 1/725

(54) **Communication managment systems and methods**

(30) Priority: 13.02.2009 TW 98104617
(71) Applicant: HTC Corporation, Taoyuan County 330 (TW)
(72) Inventor: Luke, Hok-sum H, 330, Taoyuan City (TW); Wang, John C., 330, Taoyuan City (TW); Chen, Yu-Chuan, 330, Taoyuan City (TW)
(74) Representative: 2K Patentanwälte Blasberg Kewitz & Reichel

(57) **Abstract**

Communication management systems and methods are provided. The communication management system includes a reception unit, a telecommunication processing unit, a storage unit, and a processing unit. The reception unit receives data, wherein the data includes at least one communication party. The processing unit receives a selection corresponding to the communication party in the data, and in response to the selection corresponding to the communication party, automatically retrieves a phone number of the communication party from an address book in the storage unit according to identification data of the communication party. Then, the processing unit establishes a call with the communication party according to the phone number via the telecommunication processing unit.

## Description

### CROSS REFERENCE TO RELATED APPLICATIONS

This Application claims priority of Taiwan Patent Application No. 098104617, filed on February 13, 2009, the entirety of which is incorporated by reference herein.

### BACKGROUND OF THE INVENTION

### FIELD OF THE INVENTION

The disclosure relates generally to communication management systems and methods, and, more particularly to communication management systems and methods that convert communications based on texts into communications based on voices.

### DESCRIPTION OF THE RELATED ART

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become necessities of life.

Currently, design trends for handheld devices are toward miniaturization. Thus, keyboards or displays of the handheld devices are small and inconvenient for users. For users who frequently receive and send email messages on handheld devices, and also require communicating with parties of the email message received by voice, the voice communication is inconvenient as users must memorize names or email addresses to manipulate various functions of the handheld devices. Thus, related operations of the handheld devices are complex and inconvenient for users.

### BRIEF SUMMARY OF THE INVENTION

Communication management systems and methods are provided.

An embodiment of a communication management system includes a reception unit, a telecommunication processing unit, a storage unit, and a processing unit. The reception unit receives data, wherein the data includes at least one communication party. The telecommunication processing unit links to a telecommunication network, thus enabling an electronic device equipped with a telecommunication capability. The storage includes at least one address book. The processing unit receives a selection corresponding to the communication party in the data, and in response to the selection corresponding to the communication party, automatically retrieves a phone number of the communication party from the address book in the storage unit according to identification data of the communication party. Then, the processing unit establishes a call with the communication party according to the phone number via the telecommunication processing unit.

In an embodiment of a communication management method, data is obtained, wherein the data includes at least one communication party. Then, a selection corresponding to the communication party in the data is received. Then, a phone number of the communication party is automatically retrieved from an address book according to identification data of the communication party, and a telecommunication network is connected according to the phone number to establish a call with the communication party.

Communication management systems and methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a communication management system of the invention;

Fig. 2 is a flowchart of an embodiment of a communication management method of the invention;

Fig. 3 is a flowchart of an embodiment of a method of communication party selection of the invention;

Fig. 4 is a flowchart of another embodiment of a method of communication party selection of the invention;

Fig. 5 is a flowchart of another embodiment of a method of communication party selection of the invention;

Fig. 6 is a flowchart of another embodiment of a communication management method of the invention;

Fig. 7 is a schematic diagram illustrating an embodiment of data displayed in a touch-sensitive display unit of the invention;

Fig. 8 is a schematic diagram illustrating an embodiment of an operational interface of the invention; and

Fig. 9 is a schematic diagram illustrating an embodiment of an operational interface of the invention.

### DETAILED DESCRIPTION OF THE INVENTION

Communication management systems and methods are provided.

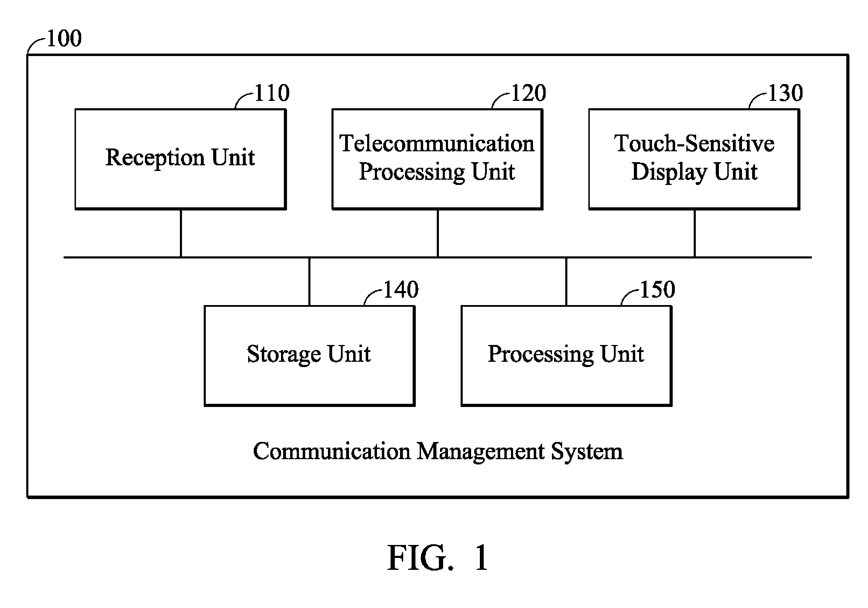

Fig. 1 is a schematic diagram illustrating an embodiment of a communication management system of the invention. The communication management system 100 can be used in an electronic device, such as a portable device comprising handheld devices such as a media player, a PDA (Personal Digital Assistant), a GPS (Global Positioning System) device, a smart phone, a mobile phone, a MID (Mobile Internet Device, MID), and a Netbook.

The communication management system 100 comprises a reception unit 110, a telecommunication processing unit 120, a touch-sensitive display unit 130, a storage unit 140, and a processing unit 150. The reception unit 110 can receives data, such as an email message or multimedia message. The data comprises at least one communication party, such as a sender, a recipient, and/or a copy recipient. Each communication party may have identification data, such as a name, and/or an email address. In some embodiments, the reception unit 110 may be the telecommunication processing unit 120 or a connection unit corresponding to a network, such as a wireless or wired network. The telecommunication processing unit 120 may be a baseband processing unit, which is a necessary component of the electronic device providing communication capabilities. The telecommunication processing unit 120 performs related communication operations, such as voice message decoding, error correction decoding, data encryption, demodulation, channeling, and others. The touch-sensitive display unit 130 is a screen integrated with a touch-sensitive device (not shown). The touch-sensitive device has a touch-sensitive surface comprising sensors in at least one dimension to detect contact and movement of an input tool, such as a stylus or finger on the touch-sensitive surface. The touch-sensitive display unit 130 can display related data received by the reception unit 110, and/or related figures and interfaces. The storage unit 140 comprises at least an address book (not shown). The address book record related information, such as a name, an email address, and/or a phone number of a plurality of users. The processing unit 150 performs the communication management method of the invention, which will be discussed further in the following paragraphs.

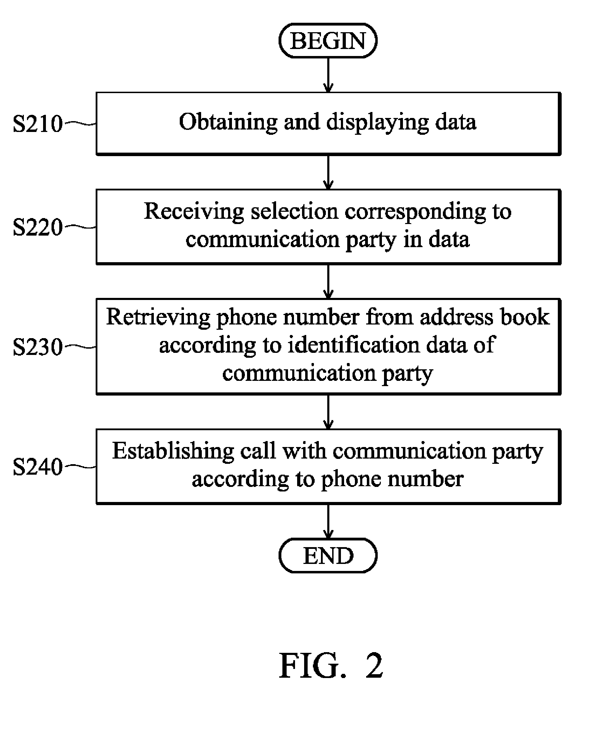

Fig. 2 is a flowchart of an embodiment of a communication management method of the invention. The communication management method can be used for an electronic device, such as a portable device comprising handheld devices such as a media player, a PDA, a GPS device, a smart phone, a mobile phone, a MID, and a Netbook.

In step S210, data is obtained and displayed. The data records at least one communication party, such as a sender, a recipient, and/or a copy recipient. In step S220, a selection corresponding to the communication party in the data is received. It is understood that, the selection corresponding to the communication party can be performed using a keyboard (not shown) of the electronic device or directly using the touch-sensitive display unit displaying the data. The methods for selecting the communication party are discussed later. When the selection corresponding to the communication party is received, in step S230, a phone number of the communication party is automatically retrieved from the address book according to identification data, such as a name, and/or an email address of the selected communication party. It is understood that, in some embodiments, if the address book does not have the identification data or the phone number of the selected communication party, the electronic device can connect with a server via a wired or wireless network, or a telecommunication network, and the phone number of the communication party can be retrieved from the server according to the identification data of the selected communication party. Then, in step S240, a telecommunication network is connected according to the phone number to establish a call with the selected communication party. It is noted that, in some embodiments, steps S210 and S220 are performed and managed by a data management application, and after the communication party is selected, the selected communication party is processed as candidate data and provided to a dial application to perform subsequent operations comprising the retrieval of a phone number thereof and dialing.

Following are embodiments of methods for selecting the communication party.

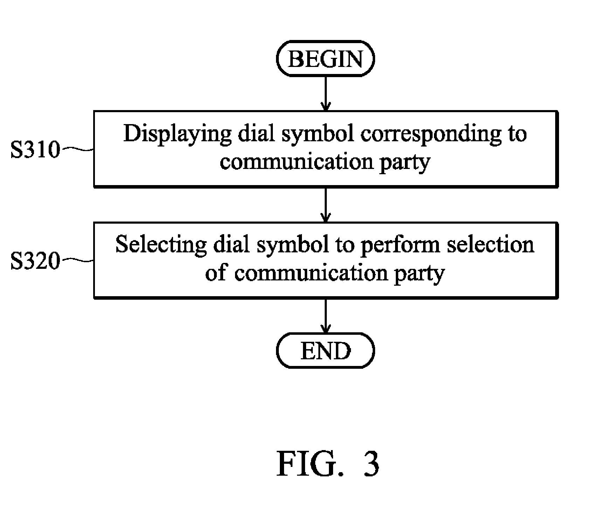

Fig. 3 is a flowchart of an embodiment of a method of communication party selection of the invention.

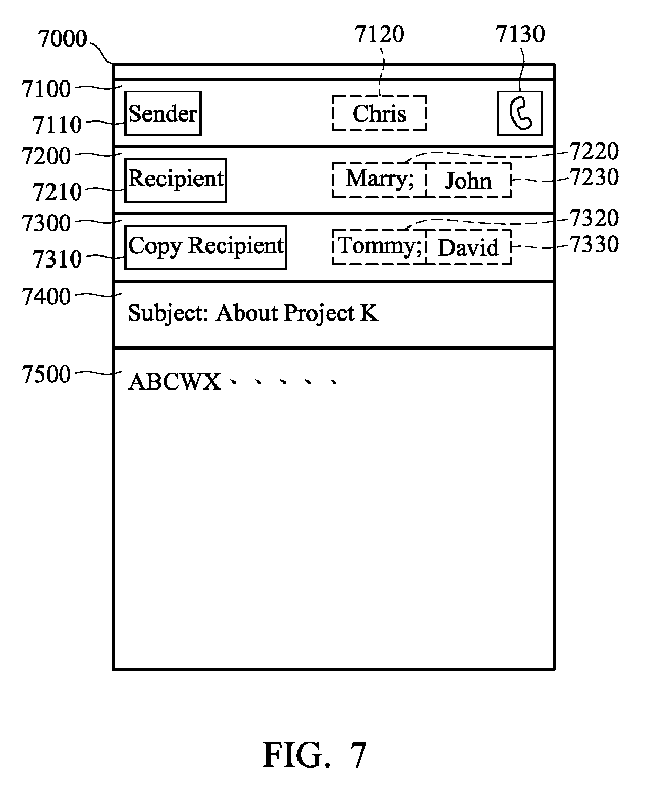

In step S310, data and a dial symbol corresponding to the communication party in the data are displayed in the touch-sensitive display unit. In step S320, the selection of the communication party is performed by selecting the dial symbol corresponding to the communication party via the touch-sensitive display unit. For example, Fig. 7 is a schematic diagram illustrating an embodiment of data displayed in a touch-sensitive display unit of the invention. As shown in Fig. 7, the data is an email message 7000 including a sender field 7100, a recipient field 7200, a copy recipient field 7300, a subject filed 7400, and a content field 7500. The sender field 7100, the recipient field 7200, and the copy recipient field 7300 respectively include a sender field symbol 7110, a recipient field symbol 7210, and a copy recipient field symbol 7310. In this example, the sender of the email message 7000 is "Chris" 7120, the recipients of the email message 7000 include "Marry" 7220 and "John" 7230, and the copy recipients of the email message 7000 includes "Tommy" 7320 and "David" 7330. In this example, sender "Chris" 7120 has a corresponding dial symbol 7130. When the dial symbol 7130 is selected, it means "Chris" is selected, and a phone number of "Chris" is automatically retrieved from the address book according to the identification data of "Chris", and a call is establish accordingly. It is noted that, in some embodiments, a user can also directly select "Chris" 7120 in the sender field 7100 for automatic dialing.

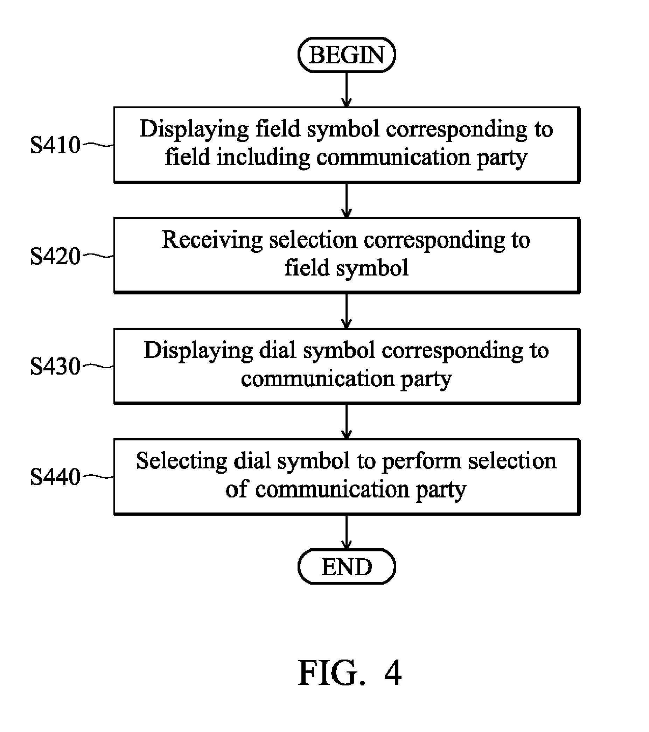

Fig. 4 is a flowchart of another embodiment of a method of communication party selection of the invention.

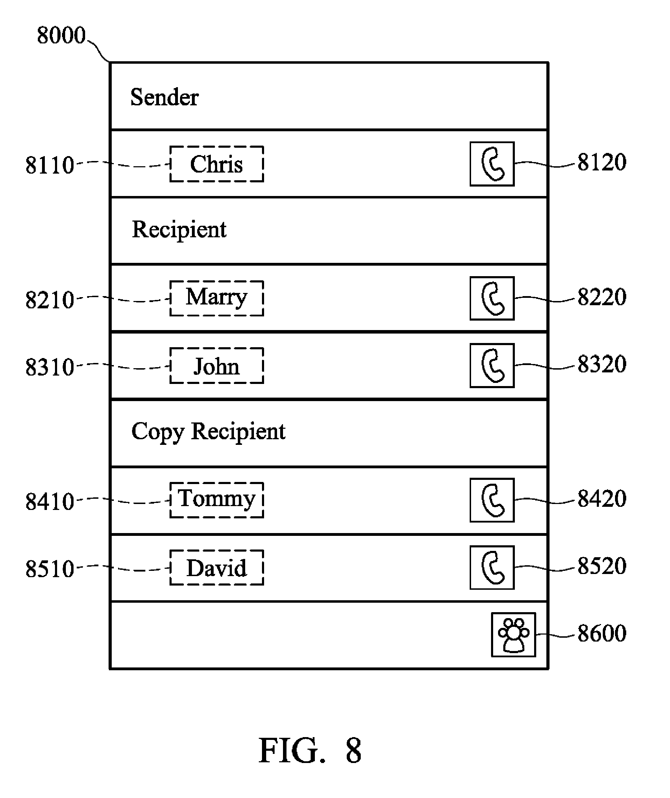

In step S410, data and a field symbol corresponding to at least one field including the communication party in the data are displayed in the touch-sensitive display unit, such as the sender field symbol 7110, the recipient field symbol 7210, and the copy recipient field symbol 7310 in Fig. 7. In step S420, a selection corresponding to one of the field symbols is received via the touch-sensitive display unit, and in step S430, in response to the selection corresponding to the field symbol, a dial symbol corresponding to the respective communication party included in the selected field is displayed via the touch-sensitive display unit. Then, in step S440, the selection of the communication party is performed by selecting the dial symbol corresponding to the communication party via the touch-sensitive display unit. For example, when the sender field symbol 7110 is selected, the touch-sensitive display unit can display an operational interface 8000, as shown in Fig. 8. In Fig. 8, the communication parties and the corresponding dial symbols in the respective fields are displayed. In this example, sender "Chris" 8110 has a corresponding dial symbol 8120, recipient "Marry" 8210 and "John" 8310 respective have a corresponding dial symbol 8220 and 8320, and copy recipient "Tommy" 8410 and "David" 8510 respective have a corresponding dial symbol 8420 and 8520. It is noted that, in some embodiments, the communication party and the corresponding dial symbol in the field corresponding to the selected field symbol are displayed in the center of the touch-sensitive display unit. When a dial symbol is selected, it means the corresponding communication party is selected, and a phone number of the communication party is automatically retrieved from the address book according to the identification data of the communication party, and a call is establish accordingly. Additionally, in some embodiments, only the communication party and the corresponding dial symbol of the field corresponding to the selected field symbol are displayed in the touch-sensitive display unit, and the communication parties of the un-selected fields are not displayed.

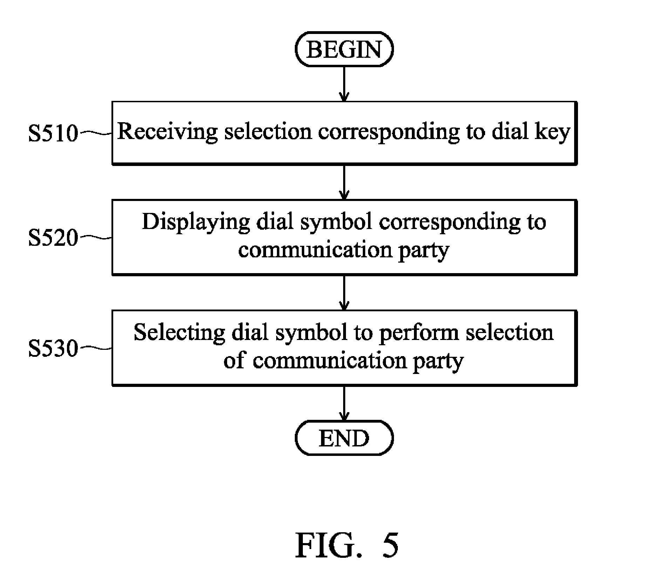

Fig. 5 is a flowchart of another embodiment of a method of communication party selection of the invention.

In step S510, a selection corresponding to a dial key is received. It is noted that, in some embodiments, the dial key can be a physical key of the electronic device. In some embodiments, the dial key can be a virtual button displayed in the touch-sensitive display unit. When the selection corresponding to the dial key is received, in step S520, the dial symbol corresponding to the communication party in the data is displayed via the touch-sensitive display unit, as shown in Fig. 8. Then, in step S530, the selection of the communication party is selected by selecting the dial symbol corresponding to the communication party via the touch-sensitive display unit.

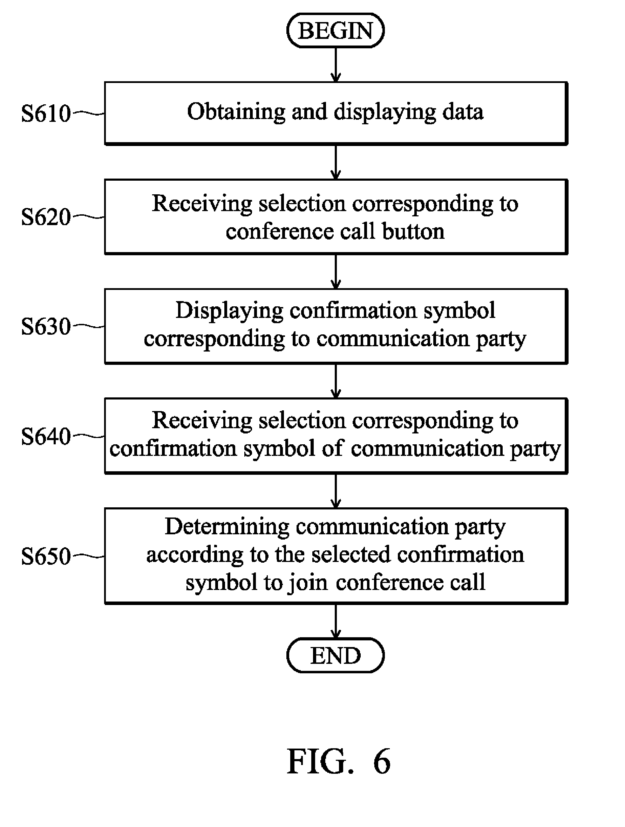

Fig. 6 is a flowchart of another embodiment of a communication management method of the invention. The communication management method can be used for an electronic device, such as a portable device comprising handheld devices such as a media player, a PDA, a GPS device, a smart phone, a mobile phone, a MID, and a Netbook.

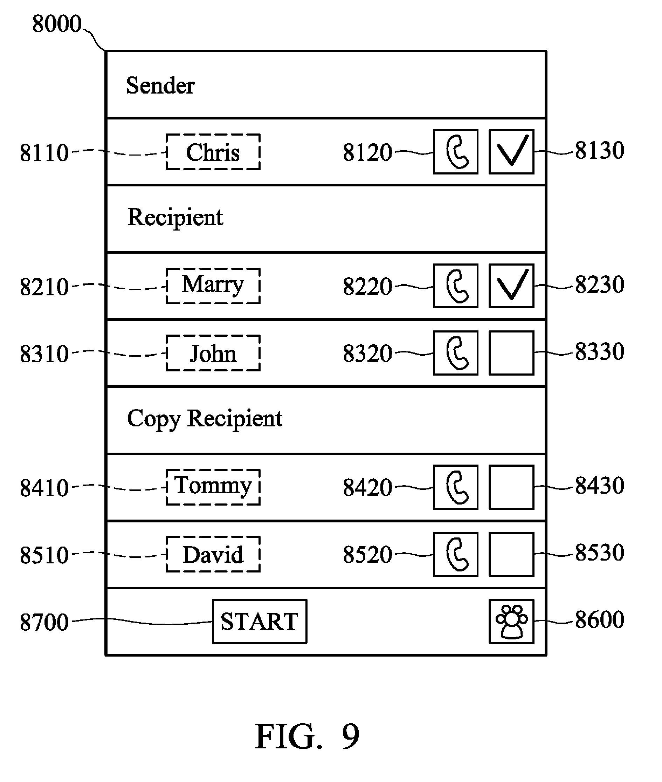

In step S610, data is obtained and displayed. The data records at least one communication party, such as a sender, a recipient, and/or a copy recipient. In step S620, a conference mode button is displayed, and a selection corresponding to the conference mode button is received. For example, the operational interface 8000 in Fig. 8 can display a conference mode button 8600. In response to the selection of the conference mode button, in step S630, a confirmation symbol corresponding to the respective communication party is displayed in the touch-sensitive display unit, as shown in Fig. 9. In Fig. 9, sender "Chris" 8110 has a corresponding confirmation symbol 8130, recipient "Marry" 8210 and "John" 8310 respective have a corresponding confirmation symbol 8230 and 8330, and copy recipient "Tommy" 8410 and "David" 8510 respective have a corresponding confirmation symbol 8430 and 8530. Then, in step S640, selections corresponding to the confirmation symbols of the respective communication parties are received. For example, the confirmation symbols 8130 and 8230 corresponding to sender "Chris" 8110 and recipient "Marry" 8210 are selected. After the confirmation symbols are selected, in step S650, the communication parties are determined according to the selected confirmation parties, and a conference call is established among the determined communication parties. It is understood that, in some embodiments, after the confirmation symbols are selected, a start button 8700 can be displayed, as shown in Fig. 9, and the conference call is established when the start button is selected. It is noted that, the phone numbers of the determined communication parties can be simultaneously or individually retrieved from the address book according to the identification data thereof, and a call is established accordingly. It is noted that, the confirmation symbols of the respective communication parties are simultaneously displayed in a single interface in the example of Fig. 9, and selection of the communication parties can be performed simultaneously. However, in some embodiments, the selection of each communication party can be performed individually. For example, a specific communication party, such as "Chris" 8110 in the operational interface 8000 of the Fig. 8 can be selected first, such that a confirmation interface for the specific communication party is displayed for performing the selection of the specific communication party. After the selection of the specific communication party is finished, the operational interface 8000 of Fig. 8 can be displayed again. The selections of other communication parties are similar, and are omitted herefrom. After the communication parties are selected, a conference call is established among the selected communication parties. Similarly, in some embodiments, steps S610 to S650 are performed and managed by a data management application, and after the communication parties are selected, the selected communication parties is processed as candidate data and provided to a dial application to perform subsequent operations comprising the retrieval of a phone number thereof and dialing.

Therefore, the communication management systems and methods can convert communications based on texts into communications based on voices, such that data information of related communication parties, such as an email message or multimedia message can be automatically and rapidly obtained for subsequent dialing.

Communication management systems and methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A communication management system for use in an electronic device, comprising:
a reception unit receiving data, wherein the data comprises at least one communication party;
a telecommunication processing unit linking to a telecommunication network, thus enabling the electronic device equipped with a telecommunication capability;
a storage comprising at least one address book; and
a processing unit receiving a selection corresponding to the at least one communication party in the data, in response to the selection corresponding to the communication party, automatically retrieving a phone number of the communication party from the address book in the storage unit according to identification data of the communication party, and establishing a call with the communication party according to the phone number via the telecommunication processing unit.

2. The system of claim 1, further comprising a touch-sensitive display unit for displaying the data, wherein the processing unit receives the selection corresponding to the communication party via the touch-sensitive display unit.

3. The system of claim 2, wherein the touch-sensitive display unit further displays a dial symbol corresponding to the communication party, wherein the selection corresponding to the communication party is performed by selecting the dial symbol.

4. The system of claim 2, wherein the touch-sensitive display unit further displays a field symbol corresponding to a field including the communication party, and the processing unit further receives a selection corresponding to the field symbol via the touch-sensitive display unit, and displays a dial symbol corresponding to the communication party in the touch-sensitive display unit in response to the selection corresponding to the field symbol, wherein the selection corresponding to the communication party is performed by selecting the dial symbol.

5. The system of claim 2, wherein the processing unit further receives a selection corresponding to a dial key, and displays a dial symbol corresponding to the communication party in the touch-sensitive display unit in response to the selection corresponding to the dial key, wherein the selection corresponding to the communication party is performed by selecting the dial symbol.

6. The system of claim 2, wherein the processing unit further receives a selection corresponding to a conference call button, displays a confirmation symbol corresponding to the communication party in the touch-sensitive display unit in response to the selection corresponding to the conference call button, receives a selection corresponding to the confirmation symbol of the communication party via the touch-sensitive display unit, and determines the communication party according to the selection corresponding to the confirmation symbol of the communication party to join a conference call.

7. The system of claim 1, wherein when identification data or the phone number of the communication party is not in the address book, the processing unit further links to a server, and retrieves the phone number of the communication party from the server according to identification data of the communication party.

8. The system of claim 1, wherein the data comprises an email message or a multimedia message.

9. The system of claim 1, wherein the identification data of the communication party comprises an email address.

10. The system of claim 1, wherein the communication party comprises a sender of the data, at least one recipient, or at least one copy recipient.

11. A communication management method for use in an electronic device, comprising:
obtaining data, wherein the data comprises at least one communication party;
receiving a selection corresponding to the at least one communication party in the data;
in response to the selection corresponding to the communication party, automatically retrieving a phone number of the communication party from the address book in the storage unit according to identification data of the communication party; and
connecting to a telecommunication network according to the phone number, thus to establish a call with the communication party.

12. The method of claim 11, further comprising displaying the data in a touch-sensitive display unit, wherein the selection corresponding to the communication party is received via the touch-sensitive display unit.

13. The method of claim 12, further comprising:
displaying a field symbol corresponding to a field including the
communication party in the touch-sensitive display unit;
receiving a selection corresponding to the field symbol via the touch-sensitive display unit; and
in response to the selection corresponding to the field symbol, displaying a dial symbol corresponding to the communication party in the touch-sensitive display unit,
wherein the selection corresponding to the communication party is performed by selecting the dial symbol.

14. The method of claim 12, further comprising:
receiving a selection corresponding to a conference call button;
in response to the selection corresponding to the conference call button, displaying a confirmation symbol corresponding to the communication party in the touch-sensitive display unit
receiving a selection corresponding to the confirmation symbol of the communication party via the touch-sensitive display unit; and
determining the communication party according to the selection corresponding to the confirmation symbol of the communication party to join a conference call.

15. The method of claim 11, wherein when identification data or the phone number of the communication party is not in the address book, the method further comprises the steps of:
linking to a server; and
retrieving the phone number of the communication party from the server according to identification data of the communication party.
